# EUROPÄISCHE PATENTSCHRIFT

(11) **EP 1 612 444 B1**
(45) Veröffentlichungstag und Bekanntmachung des Hinweises auf die Patenterteilung: **12.03.2008**
(21) Anmeldenummer: 04015206.8
(22) Anmeldetag: 29.06.2004
(51) Int. Cl.: F16D 25/10, F16D 25/0638, F16D 21/06

(54) **Mehrfachkupplungsanordnung**
Multiple clutch arrangement
Disposition d'embrayage multiple

(43) Veröffentlichungstag der Anmeldung: 04.01.2006
(60) Teilanmeldung: 07016442.1
(73) Patentinhaber: BorgWarner Inc., Auburn Hills, MI 48326 (US)
(72) Erfinder: Bauer, Karl-Heinz, 76676 Graben-Neudorf (DE); Gerathewohl, Rainer, 76149 Karlsruhe (DE); Günter, Frank, Dr., 76228 Karlsruhe (DE); Hauck, Hans-Jürgen, 76137 Karlsruhe (DE); Heber, Klaus, 71686 Remseck (DE); Heinrich, Johannes, Dr., 613181 Friedrichsdorf (DE); Weinhold, Carsten, 68766 Hockenheim (DE)
(74) Vertreter: Patentanwälte Westphal, Mussgnug & Partner

(56) Entgegenhaltungen:
- DE-A- 10 143 834
- DE-B- 1 217 800
- DE-C- 953 406
- US-A- 2 919 778
- US-A- 3 858 698
- US-A- 5 232 411
- US-A1- 2003 057 051
- US-A1- 2003 075 413

## Beschreibung

Die Erfindung betrifft eine Mehrfachkupplungsanordnung, insbesondere Doppelkupplungsanordnung, nach dem Oberbegriff des Patentanspruchs 1.

Mehrfachkupplungen für Kraftfahrzeuge werden häufig nach der Art ihrer Reibpartner in trockene oder nasse, d.h. mittels flüssigem Kühlmedium gekühlte, Kupplungen unterschieden. Man kann Mehrfachkupplungen, insbesondere Doppelkupplungen, auch nach ihrer Anordnung unterscheiden. Insbesondere bei den nassen Doppelkupplungen gibt es die radial ineinander geschachtelte Bauart ("konzentrische Anordnung"), bei der die beim Betätigen in Reibschluss verbrachten Reibscheiben einer radial äußeren Kupplung die entsprechenden Reibscheiben einer radial inneren Kupplung umschließen, und die axial hintereinander angeordnete Bauart, bei der die Reibscheiben der Kupplungen längs einer gemeinsamen Drehachse hintereinander angeordnet sind ("parallele Anordnung").

Die vorliegende Erfindung betrifft Mehrfachkupplungsanordnungen in radial geschachtelter Bauart. Derartige Mehrfachkupplungen, von denen die Erfindung ausgeht, sind z.B. in der EP 0 758 434 B1, der DE 101 11 202 A1, der DE 102 31 405 A1, der DE 102 22 933 A1, der DE 203 10 015 U1, der DE 102 03 618 A1, der DE 102 23 892 A1, der DE 100 04 186 A1 oder der DE 100 04 189 A1 beschrieben.

Die in diesen Dokumenten vorgestellten Kupplungen umfassen eine erste äußere Kupplung mit einem wenigstens eine Außenlamelle tragenden Außenlamellenträger und mit einem wenigstens eine Innenlamelle tragenden Innenlamellenträger sowie eine zweite innere Kupplung mit einem wenigstens eine Außenlamelle tragenden Außenlamellenträger und mit einem wenigstens eine Innenlamelle tragenden Innenlamellenträger. Die Lamellen der äußeren Kupplung und die Lamellen der inneren Kupplung drehen sich um eine gemeinsame Drehachse. Die Lamellen der äußeren Kupplung sind dabei radial außerhalb der Lamellen der inneren Kupplung angeordnet, wobei die Lamellen der äußeren Kupplung und die Lamellen der inneren Kupplung in der Regel im gleichen axialen Abschnitt angeordnet sind, so dass die äußeren Lamellen die inneren Lamellen radial umgreifen. Jede Kupplung umfasst einen Betätigungskolben, mit dessen Hilfe die Lamellen der jeweiligen Kupplung in Reibschluss verbracht werden können. Jeder Betätigungskolben ist von einem entsprechenden Zylinder axial verschieblich geführt. Zylinder und Betätigungskolben bilden jeweils einen sogenannten Druckraum, welcher mittels eines Fluids, insbesondere Hydraulikflüssigkeit, mit einem Druck beaufschlagt werden kann, um die Lamellen in (oder ggf. auch außer) Reibeingriff zu verbringen. Häufig ist zusätzlich einem oder beiden Betätigungskolben ein sogenannter Ausgleichskolben zugeordnet. Betätigungskolben und Ausgleichskolben bilden einen sogenannten Ausgleichsraum. Diesem Ausgleichsraum ist ebenfalls ein Fluid zuführbar oder mit einem Fluid, also z.B. Hydraulikflüssigkeit (sogenanntes Fliehöl), befüllt. Das in diesem Ausgleichsraum befindliche Fluid dient dazu, eine mit zunehmender Drehzahl auftretende fliehkraftbedingte Drucküberhöhung im Druckraum (weitgehend) auszugleichen. In manchen Fällen kann auch eine Unter- oder Überkompensation dieser Drucküberhöhung wünschenswert sein.

Die in den vorstehend genannten Dokumenten vorgestellten Kupplungen sind hinsichtlich unterschiedlichster Parameter optimiert; sie haben jedoch miteinander gemein, dass der Druckraum der inneren Kupplung durch den Betätigungskolben der inneren Kupplung und den Außenlamellenträger der inneren Kupplung gebildet ist. Außerdem ist der Ausgleichsraum der äußeren Kupplung durch den Betätigungskolben der äußeren Kupplung und den Außenlamellenträger der inneren Kupplung gebildete

Weitere Mehrfachkupplungsanordnungen in radial geschachtelter Bauart sind aus US 5,232,411, US 3,858,698 und DE 101 43834A1 bekannt.

Obwohl sich jede der Kupplungen für den jeweiligen in den vorstehend genannten Druckschriften beschriebenen Anwendungsfall dem Grunde nach bewährt hat, besteht weiterhin der Bedarf, den Bauraum möglichst klein zu halten.

Die Aufgabe der Erfindung besteht nunmehr darin, eine Mehrfachkupplungsanordnung der gattungsgemäßen Art mit vergleichsweise geringem axialem Bauraumbedarf vorzustellen.

Diese Aufgabe wird durch eine Mehrfachkupplungsanordnung mit den Merkmalen des Patentanspruchs 1 gelöst.

Vorteilhafte Ausführungen und Weiterbildungen der Erfindung sind in den Unteransprüchen angegeben.

Die Erfindung geht ganz allgemein von einer Mehrfachkupplungsanordnung, insbesondere Doppelkupplungsanordnung, in radial geschachtelter Bauart mit einer äußeren Kupplung und mit einer inneren Kupplung aus.

Weist die innere Kupplung einen Betätigungskolben und einen Zylinder, welche gemeinsam einen Druckraum bilden, auf, ist vorgesehen, dass der Zylinder der inneren Kupplung einen Außenlamellenträger der äußeren Kupplung bildet. Weist die äußere Kupplung einen Betätigungskolben und einen Ausgleichskolben, welche zusammen einen Ausgleichsraum bilden, auf, so ist alternativ oder zusätzlich vorgesehen, dass der Ausgleichskolben der äußeren Kupplung den Außenlamellenträger der äußeren Kupplung bildet.

Beide Alternativen haben den Vorteil, dass sich der Bauraumbedarf in axialer Richtung aufgrund der Möglichkeit der Reduzierung der Anzahl notwendiger Bauteile verringern lässt. Darüber hinaus ist es in allen Fällen möglich, eine Überkompensation der fliehkraftbedingten Drucküberhöhungen in den jeweiligen Druckräumen durch entsprechende Anordnung von Ausgleichräumen zu erzielen.

Eine extrem kurz bauende Mehrfachkupplungsanordnung erhält man erfindungsgemäß, wenn der Betätigungskolben der äußeren Kupplung und ein Zylinder einen Druckraum bilden und der Betätigungskolben der inneren Kupplung und ein Ausgleichskolben einen Ausgleichsraum bilden, wobei die Druckräume und Ausgleichsräume radial innerhalb eines Innenlamellenträgers der inneren Kupplung angeordnet sind.

Eine Reduzierung der axialen Erstreckung der Mehrfachkupplungsanordnung lässt sich in den Fällen, in denen der Außenlamellenträger den Zylinder der inneren Kupplung oder den Ausgleichskolben der äußeren Kupplung bildet, erreichen, indem der Außenlamellenträger der äußeren Kupplung und ein Außenlamellenträger der inneren Kupplung drehfest miteinander verbunden sind.

Die Zahl der notwendigen Einzelkomponenten der Mehrfachkupplungseinrichtung der letztgenannten Art lässt sich reduzieren, wenn der Außenlamellenträger der äußeren Kupplung und der mit diesem drehfest verbundene Außenlamellenträger der inneren Kupplung einstückig ausgebildet sind.

Da der Außenlamellenträger der äußeren Kupplung und der Außenlamellenträger der inneren Kupplung jeweils radial verlaufende Abschnitte aufweisen, ist in einer bevorzugten Ausführungsvariante erfindungsgemäß vorgesehen, dass der Außenlamellenträger der äußeren Kupplung und der mit diesem drehfest verbundene Außenlamellenträger der inneren Kupplung eine gemeinsame Scheibe aufweisen, mit welcher zwei die jeweiligen Außenlamellen tragenden Zylinder drehfest verbunden sind.
In Ausgestaltung dieser Variante ist vorgesehen, dass die gemeinsame Scheibe mit wenigstens einem der die jeweiligen Au-ßenlamellen tragenden Zylinder einstückig ausgebildet ist. Diese Variante hat zum einen fertigungstechnische Vorteile, da sich die Einzelteile durch einfache formgebende Verfahren herstellen lassen. Darüber hinaus können etwaig erforderliche Schweißnähte dort angebracht werden, wo vergleichsweise geringe mechanische Belastungen im Betrieb der Mehrfachkupplungsanordnung auftreten. Die Einzelteile lassen sich auch durch ineinander fügen korrespondierender Verzahnungen aneinander befestigen.

Vorzugsweise durchdringt der Betätigungskolben der äußeren Kupplung den Außenlamellenträger der äußeren Kupplung. Auch diese Maßnahme trägt zur Reduzierung des axialen Bauraumbedarfs bei.

Eine konstruktiv einfache Bauweise besteht darin, den Betätigungskolben der äußeren Kupplung mit einem oder mehreren Fingern zu versehen, welche durch eine oder mehrere entsprechende in den Außenlamellenträger der äußeren Kupplung eingebrachte Öffnungen hindurchführbar sind.

Zusätzlich kann eine Fliehölkompensation von über 100% an äußerer und innerer Kupplung der Mehrfachkupplungsanordnung erreicht werden, wenn der Ausgleichskolben der inneren Kupplung den Betätigungskolben der inneren Kupplung den Ausgleichsraum der inneren Kupplung bildend umgreift, wenn der Betätigungskolben der inneren Kupplung den Außenlamellenträger der äußeren Kupplung den Druckraum der inneren Kupplung bildend umgreift, wenn der Außenlamellenträger der äußeren Kupplung den Betätigungskolben der äußeren Kupplung den Ausgleichsraum der äußeren Kupplung bildend umgreift und wenn der Betätigungskolben der äußeren Kupplung den Zylinder der äußeren Kupplung den Druckraum der äußeren Kupplung bildend umgreift.

Die Erfindung wird nunmehr anhand der Zeichnungen näher beschrieben. Es zeigen:

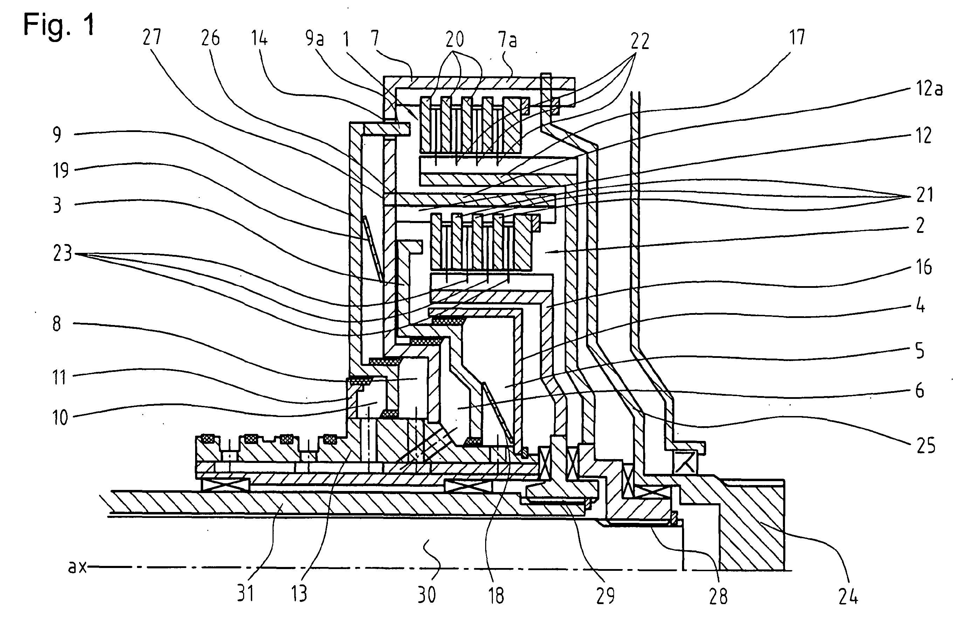

- Figur 1: ein erstes Ausführungsbeispiel einer erfindungsgemäßen Doppelkupplungsanordnung in radial geschachtelter Anordnung bei der der Außenlamellenträger der äußeren Kupplung zusammen mit dem Betätigungskolben der inneren Kupplung den Druckraum der inneren Kupplung und der Außenlamellenträger der äußeren Kupplung zusammen mit dem Ausgleichskolben der äußeren Kupplung den Ausgleichsraum der äußeren Kupplung bildet (Axialhalbschnitt),

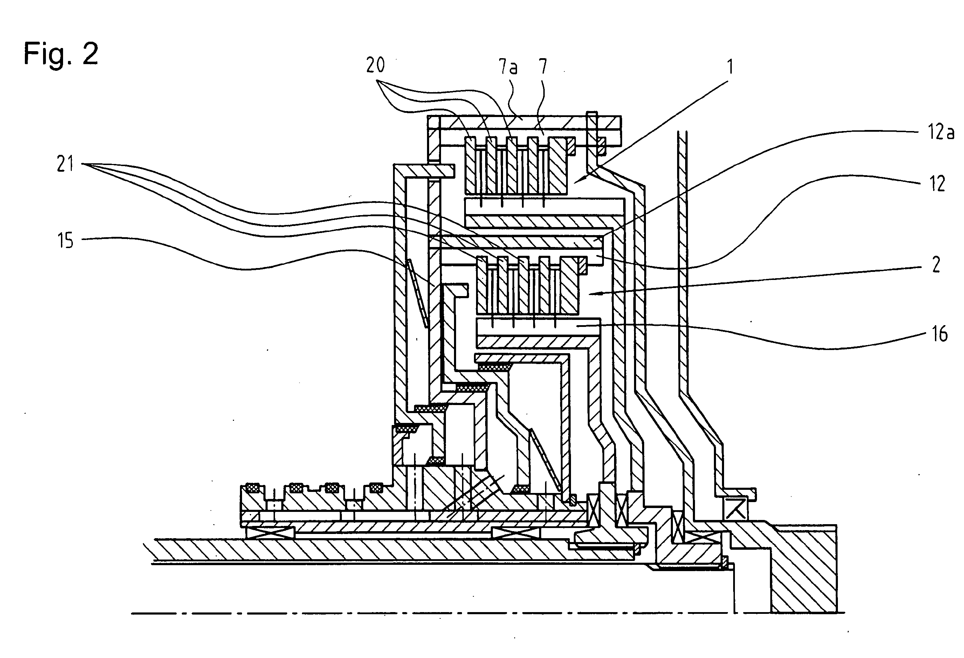

- Figur 2: ein zweites Ausführungsbeispiel einer erfindungsgemäßen Doppelkupplungsanordnung in radial geschachtelter Anordnung bei der eine Scheibe vorgesehen ist, an der ein Außenlamellen tragender Zylinder des Außenlamellenträgers der äußeren Kupplung sowie ein Außenlamellen tragender Zylinder des Außenlamellenträgers der inneren Kupplung befestigt sind. Die Scheibe bildet zusammen mit dem Betätigungskolben der inneren Kupplung den Druckraum der inneren Kupplung und zusammen mit dem Ausgleichskolben der äußeren Kupplung den Ausgleichsraum der äußeren Kupplung (Axialhalbschnitt),

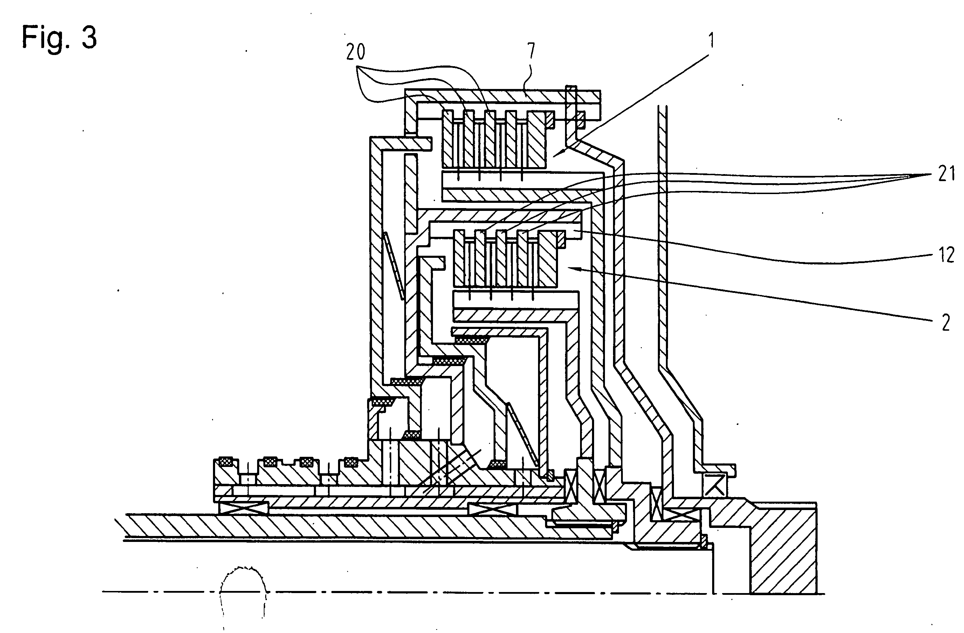

- Figur 3: ein drittes Ausführungsbeispiel einer erfindungsgemäßen Doppelkupplungsanordnung in radial geschachtelter Anordnung bei der der ringförmige Außenlamellenträger der äußeren Kupplung an den Außenlamellenträger der inneren Kupplung angeschweißt ist. Der Außenlamellenträger der inneren Kupplung bildet zusammen mit dem Betätigungskolben der inneren Kupplung den Druckraum der inneren Kupplung. Weiterhin bildet der Außenlamellenträger der inneren Kupplung zusammen mit dem Ausgleichskolben der äußeren Kupplung den Ausgleichsraum der äußeren Kupplung (Axialhalbschnitt)

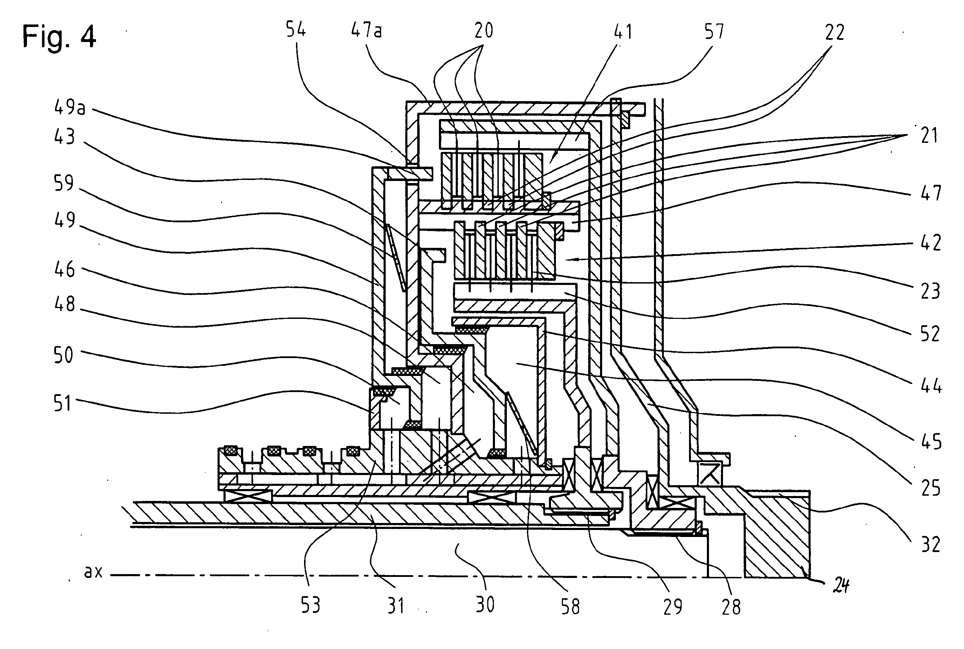

- Figur 4: eine Doppelkupplungsanordnung in radial geschachtelter Anordnung bei der der Innenlamellenträger der äußeren Kupplung zusammen mit dem Betätigungskolben der inneren Kupplung den Druckraum der inneren Kupplung und der Innenlamellenträger der äußeren Kupplung zusammen mit dem Ausgleichskolben der äußeren Kupplung den Ausgleichsraum der äußeren Kupplung bildet (Axialhalbschnitt).

Ein erstes Ausführungsbeispiel einer erfindungsgemäßen Doppelkupplungsanordnung im Axialhalbschnitt zeigt die Figur 1.

Die Doppelkupplungsanordnung umfasst eine erste äußere Kupplung 1 mit einem sechs Außenlamellen 20 tragenden Außenlamellenträger 7 und mit einem fünf Innenlamellen 22 tragenden Innenlamellenträger 17 sowie eine zweite innere Kupplung mit einem fünf Außenlamellen 21 tragenden Außenlamellenträger 12 und mit einem vier Innenlamellen 23 tragenden Innenlamellenträger 16.

Die ringförmigen Außen- und Innenlamellen 20, 21, 22, 23 der jeweiligen Kupplungen 1, 2 greifen wechselweise ineinander und bilden dabei jeweils ein Lamellenpaket.

Die Lamellen 20, 22 der äußeren Kupplung 1 und die Lamellen 21, 23 der inneren Kupplung 2 sind um eine gemeinsame Drehachse ax drehbeweglich angeordnet. Das Lamellenpaket der äußeren Kupplung 1 ist radial um das Lamellenpaket der inneren Kupplung 2 angeordnet.

Jede Kupplung 1, 2 umfasst einen Betätigungskolben 3, 9, mit dessen Hilfe die Lamellen 20, 21, 22, 23 der jeweiligen Kupplung 1, 2 in Reibschluss verbracht werden können. Jeder Betätigungskolben 3, 9 ist durch einen entsprechenden Zylinder 7, 11 axial verschieblich geführt. Die jeweiligen Zylinder 7, 11 bilden zusammen mit den korrespondierenden Betätigungskolben 3, 9 einen entsprechenden Druckraum 6, 10. Die beiden Druckräume 6, 10 können unabhängig voneinander durch Zufuhr von Hydraulikflüssigkeit mit einem Druck beaufschlagt werden. Dabei wird der jeweilige Betätigungskolben 3, 9 entgegen der Kraft einer zugeordneten Tellerfeder 18, 19 axial in Richtung des jeweiligen Lamellenpakets der entsprechenden Kupplung 1, 2 bewegt und verbringt dabei die Lamellen 20, 21, 22, 23 der jeweiligen Kupplungen 1, 2 in Reibeingriff.

Zusätzlich ist den beiden Betätigungskolben 3, 9 jeweils ein entsprechender Ausgleichskolben 4, 7 zugeordnet. Ein jeweiliger Betätigungskolben 3, 9 bildet zusammen mit dem zugehörigen Ausgleichskolben 4, 7 einen entsprechenden Ausgleichsraum 5, 8. Jedem dieser Ausgleichsräume ist über Hydraulikflüssigkeitskanäle Hydraulikflüssigkeit (sogenanntes Fliehöl) zuführbar. Das in den jeweiligen Ausgleichsräumen 5, 8 befindliche Hydraulik- oder Fliehöl dient dazu, eine mit zunehmender Drehzahl auftretende fliehkraftbedingte Drucküberhöhung im entsprechenden Druckraum 6, 10 zu kompensieren.

Im vorliegenden Ausführungsbeispiel ist die Doppelkupplung dazu vorgesehen, ein über eine Antriebswelle 24 eingeleitetes Drehmoment wahlweise an eine von zwei koaxial zu dieser Antriebswelle 24 angeordnete Abtriebswellen 30, 31 auszuleiten.

Zu diesem Zweck ist die Antriebswelle 24 über eine Seitenscheibe 25 drehfest mit dem Außenlamellenträger 7 der äußeren Kupplung 1 und jeweils eine der Abtriebswellen 30, 31 über entsprechende Steckverzahnungen 28, 29 mit einem der Innenlamellenträger 16, 17 der Kupplungen 1, 2 verbunden. Der Außenlamellenträger 12 der inneren Kupplung 2 umfasst einen die Außenlamellen 21 tragenden Zylinder 12a, welcher einendseitig eine in Achsrichtung ax verlaufende Verzahnung 26 aufweist, welche in entsprechende Öffnungen 27 im Außenlamellenträger 7 eingreift und dadurch die beiden Außenlamellenträger 7, 12 drehfest und axial im wesentlichen unbeweglich miteinander verbindet. Der Außenlamellenträger 7 der äußeren Kupplung 1 ist mit einer Kupplungsnabe 13 verschweißt, in welcher die beiden Abtriebswellen 30, 31 drehbar geführt sind.

Ein über die Antriebswelle 24 eingeleitetes Drehmoment kann nunmehr durch Betätigen der äußeren Kupplung 1 über die Seitenscheibe 25, den Außenlamellenträger 7, die Lamellen 20, 22, den Innenlamellenträger 17 und die Steckverzahnung 28 an die Vollwelle 30 übertragen werden. Durch Betätigen der inneren Kupplung 2 wird ein über die Antriebswelle 24 eingeleitetes Drehmoment über die Seitenscheibe 25, den Außenlamellenträger von äußerer und innerer Kupplung 7, 12, die Lamellen 21, 23, den Innenlamellenträger 16 und die Steckverzahnung 29 an die Hohlwelle 31 übertragen.

Um die Doppelkupplungsanordnung möglichst platzsparend auszuführen, ist die Doppelkupplung so gestaltet, dass der Betätigungskolben 9 der äußeren Kupplung 1 den Außenlamellenträger 7 der äußeren Kupplung 1 durchdringt. Zu diesem Zweck weist der Betätigungskolben 9 der äußeren Kupplung mehrere in Umfangsrichtung angeordnete Finger 9a auf und im Außenlamellenträger 7 der äußeren Kupplung 1 sind entsprechende Öffnungen 14 vorgesehen, durch die diese Finger 9a hindurchgreifen, um ein Betätigen der Kupplung 1 zu ermöglichen.

Darüber hinaus sind sämtliche Druckräume 6, 10 und Ausgleichsräume 5, 8 radial innerhalb des Innenlamellenträgers 16 der inneren Kupplung 2 angeordnet. Dabei wurde versucht, diese Druck- und Ausgleichsräume 6, 10, 5, 8 möglichst im selben axialen Abschnitt anzuordnen, in dem sich auch die Lamellenpakete der jeweiligen Kupplungen 1, 2 befinden.

Um jeweils eine über 100%-ige Fliehölkompensation zu erreichen, umgreift weiter der Ausgleichskolben 4 der inneren Kupplung 2 den Betätigungskolben 3 der inneren Kupplung 2 und bildet dabei den Ausgleichsraum 5 der inneren Kupplung 2. Weiter umgreift der Betätigungskolben 3 der inneren Kupplung 2 den Außenlamellenträger 7 der äußeren Kupplung 1 und bildet dabei den Druckraum 6 der inneren Kupplung 2. Der Außenlamellenträger 7 der äußeren Kupplung 1 umgreift den Betätigungskolben 9 der äußeren Kupplung 1 den Ausgleichsraum 8 der äußeren Kupplung 1 bildend. Der Betätigungskolben 9 der äußeren Kupplung 1 schließlich umgreift den Zylinder 11 (Kolbenboden) der äußeren Kupplung 1 und bildet dabei den Druckraum 10 der äußeren Kupplung 1.

Die Figur 2 zeigt ein weiteres zweites Ausführungsbeispiel einer erfindungsgemäßen Doppelkupplung. Die in dieser Figur 2 gezeigte Doppelkupplung ist in deren wesentlichen Bestandteilen identisch ausgeführt, wie die Doppelkupplungsanordnung nach der Figur 1. Identische Bestandteile der Doppelkupplungen sind daher in beiden Figuren mit denselben Bezugszeichen versehen.

Die Doppelkupplungsanordnung gemäß der Figur 2 unterscheidet sich von der gemäß der Figur 1 lediglich in der Ausführung der Außenlamellenträger 7, 12 der beiden Einzelkupplungen 1, 2.

Während beim Ausführungsbeispiel gemäß der Figur 1 der Außenlamellenträger 7 einteilig ausgeführt ist und lediglich zur Darstellung des Außenlamellenträgers 12 der inneren Kupplung 2 ein Zylinder 12a an diesem Außenlamellenträger 7 befestigt ist, umfasst der gemeinsame Außenlamellenträger 7, 12 eine gemeinsame Scheibe 15 und zwei den jeweiligen Außenlamellenträgern 7, 12 separat zuordenbare, die entsprechenden Außenlamellen 20, 21 tragende Zylinder 7a, 12a auf, welche an dieser in der vorstehend beschriebenen Weise befestigt sind.

Die Figur 3 zeigt ein drittes Ausführungsbeispiel einer erfindungsgemäßen Doppelkupplungsanordnung. Auch die in dieser Figur 3 dargestellte Doppelkupplungsanordnung ist in deren wesentlichen Bestandteilen identisch ausgeführt, wie die Doppelkupplungsanordnungen nach den Figuren 1 oder 2. Identische Bestandteile der Doppelkupplungsanordnung sind daher auch in dieser Figur mit den bereits in den Figuren 1 und 2 verwendeten Bezugszeichen versehen.

Die Doppelkupplungsanordnung gemäß der Figur 3 unterscheidet sich von den Doppelkupplungsanordnungen gemäß den Figuren 1 und 2 in der Ausführung der Außenlamellenträger 7, 12 der beiden Einzelkupplungen 1, 2.

Hier ist der gemeinsame Außenlamellenträger 7, 12 wie im ersten Ausführungsbeispiel zweiteilig ausgeführt. Ein Teil in Form eines Zylinders mit ringförmigem Boden bildet den eigentlichen Außenlamellenträger 7 der äußeren Kupplung 1. Ein zweites Teil mit ähnlicher Form bildet den eigentlichen Außenlamellenträger 12 der inneren Kupplung 2. Das äußere Teil ist mit dem inneren Teil den gemeinsamen Außenlamellenträger 7, 12 bildend verschweißt.

Diese Ausführungsform zeichnet sich durch deren einfache Herstellbarkeit aus.

Eine andere Doppelkupplungsanordnung im Axialhalbschnitt zeigt die Figur 4. Diese unterscheidet sich von den drei vorstehend beschriebenen Beispielen dadurch, dass nunmehr ein gemeinsamer Träger für die Innenlamellen der äußeren Kupplung und die Außenlamellen der inneren Kupplung vorgesehen ist. Die vorstehend beschriebenen Kupplungsanordnungen gehen von einem gemeinsamen Träger für die jeweiligen Außenlamellen der beiden Kupplungen aus.

Die Doppelkupplungsanordnung gemäß der Figur 4 umfasst eine erste äußere Kupplung 41 mit einem vier Außenlamellen 20 tragenden Außenlamellenträger 57 und mit einem fünf Innenlamellen 22 tragenden Innenlamellenträger 47 sowie eine zweite innere Kupplung 42 mit einem fünf Außenlamellen 21 tragenden Außenlamellenträger 47 und mit einem vier Innenlamellen 23 tragenden Innenlamellenträger 52.

Die ringförmigen Außen- und Innenlamellen 20, 21, 22, 23 der jeweiligen Kupplungen 41, 42 greifen wechselweise ineinander und bilden dabei jeweils ein Lamellenpaket.

Die Lamellen 20, 22 der äußeren Kupplung 41 und die Lamellen 21, 23 der inneren Kupplung 42 sind um eine gemeinsame Drehachse ax drehbeweglich angeordnet. Das Lamellenpaket der äußeren Kupplung 41 ist radial um das Lamellenpaket der inneren Kupplung 42 angeordnet.

Jede Kupplung 41, 42 umfasst einen Betätigungskolben 43, 49, mit dessen Hilfe die Lamellen 20, 21, 22, 23 der jeweiligen Kupplung 41, 42 in Reibschluss verbracht werden können. Jeder Betätigungskolben 43, 49 ist durch einen entsprechenden Zylinder 47, 51 axial verschieblich geführt. Die beiden Zylinder 47, 51 bilden zusammen mit den korrespondierenden Betätigungskolben 43, 49 jeweils einen entsprechenden Druckraum 46, 50.

Die beiden Druckräume 46, 50 können unabhängig voneinander durch Zufuhr von Hydraulikflüssigkeit mit einem hydraulischen Druck beaufschlagt werden. Dabei wird der jeweilige Betätigungskolben 43, 49 entgegen der Kraft einer zugeordneten Tellerfeder 58, 59 axial in Richtung des jeweiligen Lamellenpakets der entsprechenden Kupplung 41, 42 bewegt und verbringt dabei die Lamellen 20, 21, 22, 23 der jeweiligen Kupplungen 41, 42 in Reibeingriff.

Zusätzlich ist den beiden Betätigungskolben 43, 49 jeweils ein entsprechender Ausgleichskolben 44, 47 zugeordnet. Ein jeweiliger Betätigungskolben 43, 49 bildet zusammen mit dem zugehörigen Ausgleichskolben 44, 47 einen entsprechenden Ausgleichsraum 45, 48. Jedem dieser Ausgleichsräume 45, 48 ist über Hydraulikflüssigkeitskanäle Fliehöl zuführbar. Das in den jeweiligen Ausgleichsräumen 45, 48 befindliche Fliehöl dient dazu, eine mit zunehmender Drehzahl auftretende fliehkraftbedingte Drucküberhöhung im entsprechenden Druckraum 46, 50 zu kompensieren.

Auch im vorliegenden Fall ist die Doppelkupplung dazu vorgesehen, ein über eine Antriebswelle 24 eingeleitetes Drehmoment wahlweise an eine von zwei koaxial zu dieser Antriebswelle 24 angeordnete Abtriebswellen 30, 31 auszuleiten.

Zu diesem Zweck ist die Antriebswelle 24 über eine Seitenscheibe 25 mit Steckverzahnung 32 drehfest mit dem kombinierten Innenlamellenträger 47 der äußeren Kupplung 41 bzw. Außenlamellenträger 47 der inneren Kupplung 42 und jeweils eine der Abtriebswellen 30, 31 über entsprechende Steckverzahnungen 28, 29 mit dem Innenlamellenträger 52 der inneren Kupplungen 42 bzw. dem Außenlamellenträger 57 der äußeren Kupplung 41 verbunden. Der kombinierte Außen-/Innenlamellenträger 47 von innerer bzw. äußerer Kupplung 41, 42 ist im vorliegenden Ausführungsbeispiel einstückig ausgeführt. Er weist einen Außenabschnitt 47a auf, welcher den Außenlamellenträger 57 der äußeren Kupplung 41 umgreift.

Der kombinierte Außen-/Innenlamelenträger 47 ist mit einer Kupplungsnabe 53 verschweißt, in welcher die beiden Abtriebswellen 30, 31 drehbar geführt sind.

Ein über die Antriebswelle 24 eingeleitetes Drehmoment kann nunmehr durch Betätigen der äußeren Kupplung 41 über die Verzahnung 32, die Seitenscheibe 25, den Außenabschnitt 47a, den Innenlamellenträger 47 der äußeren Kupplung 41, die Lamellen 20, 22, den Außenlamellenträger 57 und die Steckverzahnung 28 an die Vollwelle 30 übertragen werden. Durch Betätigen der inneren Kupplung 42 wird ein über die Antriebswelle 24 eingeleitetes Drehmoment über die Steckverzahnung 32, die Seitenscheibe 25, den Außenlamellenträger 47 der inneren Kupplung 42, die Lamellen 21, 23, den Innenlamellenträger 52 und die Steckverzahnung 29 an die Hohlwelle 31 übertragen.

Um die Doppelkupplungsanordnung möglichst platzsparend auszuführen, ist die Doppelkupplung so gestaltet, dass der Betätigungskolben 49 der äußeren Kupplung 41 den Außenabschnitt 47a durchdringt. Zu diesem Zweck weist der Betätigungskolben 49 der äußeren Kupplung 41 mehrere in Umfangsrichtung angeordnete Finger 49a auf und im Außenabschnitt 47a sind entsprechende Öffnungen 54 vorgesehen, durch die diese Finger 49a hindurchgreifen, um ein Betätigen der Kupplung 41 zu ermöglichen.

Darüber hinaus sind sämtliche Druckräume 46, 50 und Ausgleichsräume 45, 48 radial innerhalb des Innenlamellenträgers 52 der inneren Kupplung 42 angeordnet. Dabei sind diese Druck-und Ausgleichsräume 46, 50, 45, 48 im wesentlichen im selben axialen Abschnitt angeordnet, in dem sich auch die Lamellenpakete der jeweiligen Kupplungen 41, 42 befinden.

Um jeweils eine über 100%-ige Fliehölkompensation zu erreichen, umgreift weiter der Ausgleichskolben 44 der inneren Kupplung 42 den Betätigungskolben 43 der inneren Kupplung 42 und bildet dabei den Ausgleichsraum 45 der inneren Kupplung 42. Der Betätigungskolben 43 der inneren Kupplung 42 umgreift den kombinierten Außen-/Innenlamellenträger 47 und bildet dabei den Druckraum 46 der inneren Kupplung 42. Der kombinierte Innen-/Außenlamellenträger 47 umgreift den Betätigungskolben 49 der äußeren Kupplung 41 den Ausgleichsraum 48 der äußeren Kupplung 41 bildend. Der Betätigungskolben 49 der äußeren Kupplung 41 schließlich umgreift den Zylinder 51 (Kolbenboden) der äußeren Kupplung 41 und bildet dabei den Druckraum 50 der äußeren Kupplung 41.

### Bezugszeichenliste

- 1: äußere Kupplung
- 2: innere Kupplung
- 3: Betätigungskolben der inneren Kupplung
- 4: Ausgleichskolben der inneren Kupplung
- 5: Ausgleichsraum der inneren Kupplung
- 6: Druckraum der inneren Kupplung
- 7: Außenlamellenträger der äußeren Kupplung
- 8: Ausgleichsraum der äußeren Kupplung
- 9: Betätigungskolben der äußeren Kupplung
- 10: Druckraum der äußeren Kupplung
- 11: Kolbenboden
- 12: Außenlamellenträger der inneren Kupplung
- 13: Kupplungsnabe
- 14: Öffnung
- 15: Scheibe
- 16: Innenlamellenträger der inneren Kupplung
- 17: Innenlamellenträger der äußeren Kupplung
- 18: Tellerfeder
- 19: Tellerfeder
- 20: Außenlamellen
- 21: Außenlamellen
- 22: Innenlamellen
- 23: Innenlamellen
- 24: Antriebswelle
- 25: Seitenscheibe
- 26: Verzahnung
- 27: Öffnung
- 28: Steckverzahnung
- 29: Steckverzahnung
- 30: Abtriebswelle
- 31: Abtriebswelle
- 32: Steckverzahnung

- 41: äußere Kupplung
- 42: innere Kupplung
- 43: Betätigungskolben der inneren Kupplung
- 44: Ausgleichskolben der inneren Kupplung
- 45: Ausgleichsraum der inneren Kupplung
- 46: Druckraum der inneren Kupplung
- 47: Innenlamellenträger der äußeren Kupplung
- 48: Ausgleichsraum der äußeren Kupplung
- 49: Betätigungskolben der äußeren Kupplung
- 50: Druckraum der äußeren Kupplung
- 51: Kolbenboden
- 52: Innenlamellenträger der inneren Kupplung
- 53: Kupplungsnabe
- 54: Öffnung
- 57: Außenlamellenträger der äußeren Kupplung
- 58: Tellerfeder
- 59: Tellerfeder

- 7a: Zylinder
- 9a: Finger
- 12a: Zylinder

- 47a: Außenabschnitt
- 49a: Finger

- ax: Drehachse

## Patentansprüche

1. Mehrfachkupplungsanordnung, insbesondere Doppelkupplungsanordnung, in radial geschachtelter Bauart
- mit einer äußeren Kupplung (1) mit einem Außenlamellenträger (7) und
- mit einer inneren Kupplung (2), wobei die innere Kupplung (2) einen Betätigungskolben (3) und einen Zylinder (7) aufweist, welche einen Druckraum (6) bilden und/oder wobei
- die äußere Kupplung (1) einen Betätigungskolben (9) und einem Ausgleichskolben (7) aufweist, welche einen Ausgleichsraum (8) bilden, wobei
- der Zylinder (7) der inneren Kupplung (2) der Außenlamellenträger (7) der äußeren Kupplung (1) ist und/oder wobei
- der Ausgleichskolben (7) der äußeren Kupplung (1) der Außenlamellenträger (7) der äußeren Kupplung (1) ist,
**dadurch gekennzeichnet, dass**
der Betätigungskolben (9) der äußeren Kupplung (1) und ein Zylinder (11) einen Druckraum (10) bilden und dass der Betätigungskolben (3) der inneren Kupplung (2) und ein Ausgleichskolben (4) einen Ausgleichsraum (5) bilden und dass die Druckräume (6, 10) und Ausgleichsräume (5, 8) radial innerhalb eines Innenlamellenträgers (16) der inneren Kupplung (2) angeordnet sind.

2. Mehrfachkupplungsanordnung nach Anspruch 1,
**dadurch gekennzeichnet, dass**
der Außenlamellenträger (7) der äußeren Kupplung (1) und ein Außenlamellenträger (12) der inneren Kupplung (2) drehfest miteinander verbunden sind.

3. Mehrfachkupplungsanordnung nach Anspruch 2,
**dadurch gekennzeichnet, dass**
der Außenlamellenträger (7) der äußeren Kupplung (1) und der mit diesem drehfest verbundene Außenlamellenträger (12) der inneren Kupplung (2) einstückig ausgebildet sind.

4. Mehrfachkupplungsanordnung nach Anspruch 2,
**dadurch gekennzeichnet, dass**
der Außenlamellenträger (7) der äußeren Kupplung (1) und der mit diesem drehfest verbundene Außenlamellenträger (12) der inneren Kupplung (2) eine gemeinsame Scheibe (15) aufweisen, mit welcher zwei die jeweiligen Außenlamellen (20, 21) tragenden Zylinder (7a, 12a) drehfest verbunden sind.

5. Mehrfachkupplungsanordnung nach Anspruch 4,
**dadurch gekennzeichnet, dass**
die gemeinsame Scheibe (15) mit wenigstens einem der die jeweiligen Außenlamellen (20, 21) tragenden Zylinder (7a, 12a) einstückig ausgebildet ist.

6. Mehrfachkupplungsanordnung nach einem der Ansprüche 1 bis 5,
**dadurch gekennzeichnet, dass**
der Betätigungskolben (9) der äußeren Kupplung (1) den Au-ßenlamellenträger (7) der äußeren Kupplung (1) durchdringt.

7. Mehrfachkupplungsanordnung nach Anspruch 6,
**dadurch gekennzeichnet, dass**
der Betätigungskolben (9) der äußeren Kupplung (1) einen oder mehrere Finger (9a) aufweist, welche(r) durch eine oder mehrere entsprechende Öffnungen (14) im Außenlamellenträger (7) der äußeren Kupplung (1) hindurchführbar ist bzw. sind.

8. Mehrfachkupplungsanordnung nach einem der vorangegangenen Ansprüche,
**dadurch gekennzeichnet, dass**
der Ausgleichskolben (4) der inneren Kupplung (2) den Betätigungskolben (3) der inneren Kupplung (2) den Ausgleichsraum (5) der inneren Kupplung (2) bildend umgreift und dass der Betätigungskolben (3) der inneren Kupplung (2) den Außenlamellenträger (7) der äußeren Kupplung (1) den Druckraum (6) der inneren Kupplung (2) bildend umgreift und dass der Außenlamellenträger (7) der äußeren Kupplung (1) den Betätigungskolben (9) der äußeren Kupplung (1) den Ausgleichsraum (8) der äußeren Kupplung (1) bildend umgreift und dass der Betätigungskolben (9) der äußeren Kupplung (1) den Zylinder (11) der äußeren Kupplung (1) den Druckraum (10) der äußeren Kupplung (1) bildend umgreift.

9. Mehrfachkupplungsanordnung nach einem der vorangegangenen Ansprüche,
**dadurch gekennzeichnet, dass**
der Ausgleichskolben (44) der inneren Kupplung (42) den Betätigungskolben (43) der inneren Kupplung (42) den Ausgleichsraum (45) der inneren Kupplung (42) bildend umgreift und dass der Betätigungskolben (43) der inneren Kupplung (42) den Innenlamellenträger (47) der äußeren Kupplung (41) den Druckraum (46) der inneren Kupplung (42) bildend umgreift und dass der Innenlamellenträger (47) der äußeren Kupplung (41) den Betätigungskolben (49) der äußeren Kupplung (41) den Ausgleichsraum (48) der äußeren Kupplung (41) bildend umgreift und dass der Betätigungskolben (49) der äußeren Kupplung (41) den Zylinder (51) der äußeren Kupplung (41) den Druckraum (50) der äußeren Kupplung (41) bildend umgreift.

## Claims

1. Multiple clutch arrangement, in particular dual-clutch arrangement, in a radially nested design
- having an outer clutch (1) with an outer plate carrier (7) and
- having an inner clutch (2), with the inner clutch (2) having an actuating piston (3) and a cylinder (7) which form a pressure space (6) and/or with
- the outer clutch (1) having an actuating piston (9) and a compensating piston (7) which form a compensating space (8), with
- the cylinder (7) of the inner clutch (2) being the outer plate carrier (7) of the outer clutch (1) and/or with
- the compensating piston (7) of the outer clutch (1) being the outer plate carrier (7) of the outer clutch (1),
**characterized in that**
the actuating piston (9) of the outer clutch (1) and a cylinder (11) form a pressure space (10), and **in that** the actuating piston (3) of the inner clutch (2) and a compensating piston (4) form a compensating space (5), and **in that** the pressure spaces (6, 10) and compensating spaces (5, 8) are arranged radially within an inner plate carrier (16) of the inner clutch (2).

2. Multiple clutch arrangement according to Claim 1,
**characterized in that**
the outer plate carrier (7) of the outer clutch (1) and an outer plate carrier (12) of the inner clutch (2) are rotationally fixedly connected to one another.

3. Multiple clutch arrangement according to Claim 2,
**characterized in that**
the outer plate carrier (7) of the outer clutch (1) and the outer plate carrier (12), which is rotationally fixedly connected thereto, of the inner clutch (2) are formed in one piece.

4. Multiple clutch arrangement according to Claim 2,
**characterized in that**
the outer plate carrier (7) of the outer clutch (1) and the outer plate carrier (12), which is rotationally fixedly connected thereto, of the inner clutch (2) have a common disc (15) to which are rotationally fixedly connected two cylinders (7a, 12a) which support the respective outer plates (20, 21).

5. Multiple clutch arrangement according to Claim 4,
**characterized in that**
the common disc (15) is formed in one piece with at least one of the cylinders (7a, 12a) which support the respective outer plates (20, 21).

6. Multiple clutch arrangement according to one of Claims 1 to 5,
**characterized in that**
the actuating piston (9) of the outer clutch (1) extends through the outer plate carrier (7) of the outer clutch (1) .

7. Multiple clutch arrangement according to Claim 6,
**characterized in that**
the actuating piston (9) of the outer clutch (1) has one or more fingers (9a) which can be passed through one or more corresponding openings (14) in the outer plate carrier (7) of the outer clutch (1).

8. Multiple clutch arrangement according to one of the preceding claims,
**characterized in that**
the compensating piston (4) of the inner clutch (2) engages around the actuating piston (3) of the inner clutch (2) so as to form the compensating space (5) of the inner clutch (2), and **in that** the actuating piston (3) of the inner clutch (2) engages around the outer plate carrier (7) of the outer clutch (1) so as to form the pressure space (6) of the inner clutch (2), and **in that** the outer plate carrier (7) of the outer clutch (1) engages around the actuating piston (9) of the outer clutch (1) so as to form the compensating space (8) of the outer clutch (1), and **in that** the actuating piston (9) of the outer clutch (1) engages around the cylinder (11) of the outer clutch (1) so as to form the pressure space (10) of the outer clutch (1).

9. Multiple clutch arrangement according to one of the preceding claims,
**characterized in that**
the compensating piston (44) of the inner clutch (42) engages around the actuating piston (43) of the inner clutch (42) so as to form the compensating space (45) of the inner clutch (42), and **in that** the actuating piston (43) of the inner clutch (42) engages around the inner plate carrier (47) of the outer clutch (41) so as to form the pressure space (46) of the inner clutch (42), and **in that** the inner plate carrier (47) of the outer clutch (41) engages around the actuating piston (49) of the outer clutch (41) so as to form the compensating space (48) of the outer clutch (41), and **in that** the actuating piston (49) of the outer clutch (41) engages around the cylinder (51) of the outer clutch (41) so as to form the pressure space (50) of the outer clutch (41).

## Revendications

1. Système à embrayage multiple, notamment système à double embrayage, de construction emboîtée radialement,
- comprenant un embrayage extérieur (1) avec un porte-disques extérieur (7) et
- comprenant un embrayage intérieur (2), l'embrayage intérieur (2) présentant un piston d'actionnement (3) et un cylindre (7), lesquels forment un espace de pression (6) et/ou
- l'embrayage extérieur (1) présentant un piston d'actionnement (9) et un piston d'équilibrage (7), qui forment un espace d'équilibrage (8),
- le cylindre (7) de l'embrayage intérieur (2) étant le porte-disques extérieur (7) de l'embrayage extérieur (1) et/ou
- le piston d'équilibrage (7) de l'embrayage extérieur (1) étant le porte-disques extérieur (7) de l'embrayage extérieur (1),
**caractérisé en ce que**
le piston d'actionnement (9) de l'embrayage extérieur (1) et un cylindre (11) forment un espace de pression (10) et **en ce que** le piston d'actionnement (3) de l'embrayage intérieur (2) et un piston d'équilibrage (4) forment un espace d'équilibrage (5) et **en ce que** les espaces de pression (6, 10) et les espaces d'équilibrage (5, 8) sont disposés radialement à l'intérieur d'un porte-disques intérieur (16) de l'embrayage intérieur (2).

2. Système à embrayage multiple selon la revendication 1,
**caractérisé en ce que**
le porte-disques extérieur (7) de l'embrayage extérieur (1) et un porte-disques extérieur (12) de l'embrayage intérieur (2) sont connectés l'un à l'autre de manière solidaire en rotation.

3. Système à embrayage multiple selon la revendication 2,
**caractérisé en ce que**
le porte-disques extérieur (7) de l'embrayage extérieur (1) et le porte-disques extérieur (12) de l'embrayage intérieur (2), qui est connecté de manière solidaire en rotation à celui-ci, sont réalisés d'une seule pièce.

4. Système à embrayage multiple selon la revendication 2,
**caractérisé en ce que**
le porte-disques extérieur (7) de l'embrayage extérieur (1) et le porte-disques extérieur (12) de l'embrayage intérieur (2), qui est connecté de manière solidaire en rotation à celui-ci, présentent une plaque commune (15) à laquelle deux cylindres (7a, 12a) portant les disques extérieurs respectifs (20, 21) sont connectés de manière solidaire en rotation.

5. Système à embrayage multiple selon la revendication 4,
**caractérisé en ce que**
la plaque commune (15) est réalisée d'une seule pièce avec au moins l'un des cylindres (7a, 12a) portant les disques extérieurs respectifs (20, 21).

6. Système à embrayage multiple selon l'une quelconque des revendications 1 à 5,
**caractérisé en ce que**
le piston d'actionnement (9) de l'embrayage extérieur (1) traverse le porte-disques extérieur (7) de l'embrayage extérieur (1).

7. Système à embrayage multiple selon la revendication 6,
**caractérisé en ce que**
le piston d'actionnement (9) de l'embrayage extérieur (1) présente un ou plusieurs doigts (9a) qui peut ou peuvent être guidé(s) à travers une ou plusieurs ouvertures correspondantes (14) dans le porte-disques extérieur (7) de l'embrayage extérieur (1).

8. Système à embrayage multiple selon l'une quelconque des revendications précédentes,
**caractérisé en ce que**
le piston d'équilibrage (4) de l'embrayage intérieur (2) vient en prise autour du piston d'actionnement (3) de l'embrayage intérieur (2) en formant l'espace d'équilibrage (5) de l'embrayage intérieur (2) et **en ce que** le piston d'actionnement (3) de l'embrayage intérieur (2) vient en prise autour du porte-disques extérieur (7) de l'embrayage extérieur (1) en formant l'espace de pression (6) de l'embrayage intérieur (2), et **en ce que** le porte-disques extérieur (7) de l'embrayage extérieur (1) vient en prise autour du piston d'actionnement (9) de l'embrayage extérieur (1) en formant l'espace d'équilibrage (8) de l'embrayage extérieur (1) et **en ce que** le piston d'actionnement (9) de l'embrayage extérieur (1) vient en prise autour du cylindre (11) de l'embrayage extérieur (1) en formant l'espace de pression (10) de l'embrayage extérieur (1).

9. Système à embrayage multiple selon l'une quelconque des revendications précédentes,
**caractérisé en ce que**
le piston d'équilibrage (44) de l'embrayage intérieur (42) vient en prise autour du piston d'actionnement (43) de l'embrayage intérieur (42) en formant l'espace d'équilibrage (45) de l'embrayage intérieur (42) et **en ce que** le piston d'actionnement (43) de l'embrayage intérieur (42) vient en prise autour du porte-disques intérieur (47) de l'embrayage extérieur (41) en formant l'espace de pression (46) de l'embrayage intérieur (42) et **en ce que** le porte-disques intérieur (47) de l'embrayage extérieur (41) vient en prise autour du piston d'actionnement (49) de l'embrayage extérieur (41) en formant l'espace d'équilibrage (48) de l'embrayage extérieur (41) et **en ce que** le piston d'actionnement (49) de l'embrayage extérieur (41) vient en prise autour du cylindre (51) de l'embrayage extérieur (41) en formant l'espace de pression (50) de l'embrayage extérieur (41).
